# EUROPEAN PATENT APPLICATION

(11) **EP 3 045 746 A1**
(43) Date of publication of application: **20.07.2016**
(21) Application number: 15200362.0
(22) Date of filing: 16.12.2015
(51) Int. Cl.: F16B 45/02, F16B 2/24, F16B 45/00, B60N 2/44, B60N 2/48

(54) **HOOK FOR VEHICLE SEAT**

(30) Priority: 16.12.2014 GB 201422371
(71) Applicant: McNae, Alan, Croydon, Surrey CR2 9AR (GB)
(72) Inventor: McNae, Alan, Croydon, Surrey CR2 9AR (GB)
(74) Representative: Sayer, Robert David

(57) **Abstract**

A hook device 10 for a vehicle seat, the device comprising: an elongate strip of material having at one end a forked section 20 defining an interior channel 22 extending partway along the strip's length, and a slit 26 extending further into the material from the channel with a cut formed either side of the slit to define an aperture 28. The widthways dimension of the forked section's interior channel and of the aperture are dimensioned so as to be capable of receiving, in use, a respective headrest attachment pole in order that the device can locate between a vehicle seat and an attached headrest.

## Description

This invention relates to a hook device for a vehicle seat.

There is often a need to be able to hook or hang items in a vehicle.

It is known to provide jacket hangers for fitting to the rear of car seats, for example. However, these are cumbersome, relatively complex devices that require a degree of skill, time and access to the rear of the car in order to fit. They are not suitable for hanging other items such as shopping bags or takeaway food items.

It is desirable to provide a more straightforward, inexpensive hook or hanging device that can be attached simply.

On aspect of the invention provides a hook or hanging device for a vehicle seat, the device comprising: an elongate strip of material having at one end a forked section defining an interior channel extending part-way along the strip's length, and a slit extending further into the material from the channel with a cut formed either side of the slit to define an aperture, the widthways dimension of the forked section's interior channel and of the aperture being dimensioned so as to be capable of receiving, in use, a respective headrest attachment pole in order that the device can locate between a vehicle seat and an attached headrest.

The device can be retrofitted to a vehicle seat from the front seat, with or without removing the vehicle's headrest. The end opposite the slit preferably defines, or can be manipulated to define, a hook shape so that an item can be placed over it.

The terms hook and hanger are used interchangeably throughout. The term 'end' in terms of the end opposite the slit is not intended to mean the exact terminating end, but rather the end region of the strip.

The end opposite the forked section may be shaped so as to provide a hook.

The strip may be provided in planar form, e.g. as sold. The strip may have one or more fold regions extending across the width of the strip to enable a hook to be formed by bending at the end opposite the forked section.

The strip of material may be formed of metal. Plastic may also be used.

A second aspect of the invention provides an attachment for a vehicle seat, comprising an elongate member having a lengthwise slit extending partway along the member from one end, the slit having a first widthways dimension at said end and a second, narrower, widthways dimension further along the member, an aperture being formed by a cut either side of the narrower slit for receiving in use the post of a seat headrest.

The invention will now be described, by way of non-limiting example, with reference to the accompanying drawings, in which:
Figure 1 is a perspective view of a hook or hangar device according to the invention;

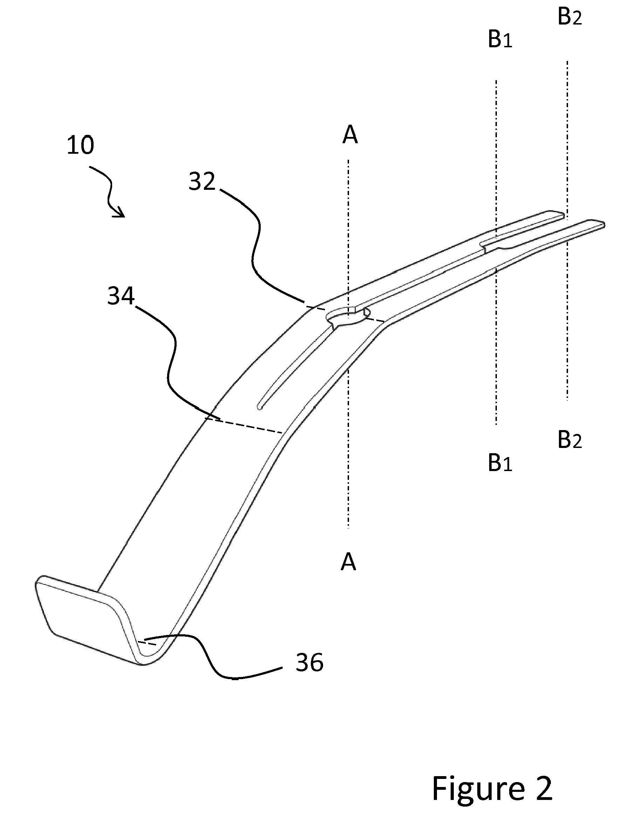

Figure 2 is a perspective view of the Figure 1 device when bent into operative shape; and
Figure 3 is a perspective view of the Figure 1 and Figure 2 device when attached to a vehicle seat.

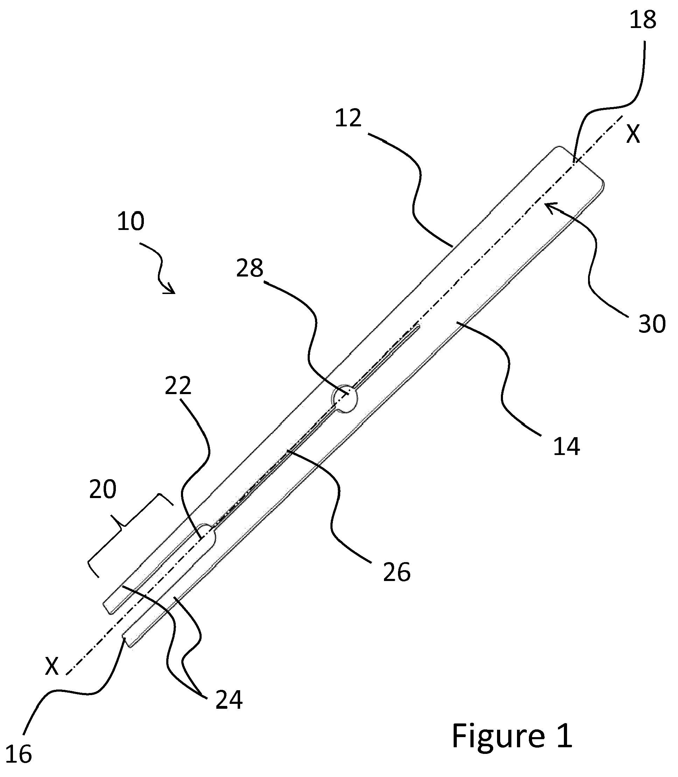

Referring to Figure 1, a hook device 10 is shown comprising an elongate metal strip having opposed first and second long sides 12, 14 and opposed first and second short sides 16, 18. The device is approximately rectangular and planar in form. Extending from the first short side 16 is an elongate U-shaped recess 22 defining a forked region 20 with two outer fingers 24. The recess 22 extends part way along the central axis X-X of the strip. From the centre of the recess 22 extends a slit 26 of narrower dimensions, again along X-X, extending further along the strip. An aperture 28 is formed by cuts either side of the slit, approximately half-way along the overall length of the device 10. The region 30 having no slit is employed to provide the hanging or hook region in use.

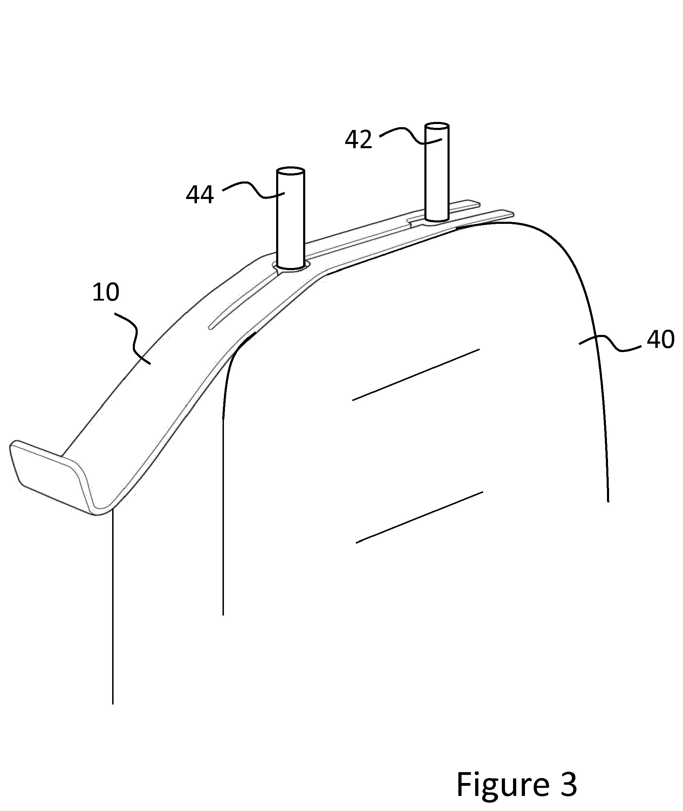

Referring to Figure 3, the hook device 10 is shown bent into operative shape. Forthis purpose, one or more fold lines or creases (essentially regions of weakness) may be provided. Here, three such lines 32, 34, 36 are shown which direct the user to form the shown hook shape.

The widthways dimensions of the U-shaped recess 22 and the aperture 28 are each arranged such as to accommodate the maximum diameter of a headrest upright post, which tends to be 10 - 16 mm. Axis A-A is indicative of the location of one such post, whereas the U-shaped recess 22 allows the device 10 to locate around the other post to secure it in position, allowing for variations in the widthways spacing between the two posts which varies from vehicle to vehicle. This is indicated by the region between Axes B₁-B₁ and B₂-B₂.

Referring to Figure 3, the device 10 is retro-fitted to a vehicle seat 40 by removing the headrest, locating the device over the securing holes of the headrest so that the aperture 32 is adjacent and aligned with the innermost hole, and then re-inserting the headrest into the holes so that the posts 42, 44 locate within the U-shaped recess 22 and aperture 32 respectively, as shown. This means that the device 10 is between the seat 40 and headrest, with lateral movement inhibited by the two posts 42, 44. The hook region 30 hangs over the region between the seats, providing a convenient hanging mechanism which is easily access by the driver or passenger, as well as by people in the rear.

Alternatively, the device 10 can be fitted without the need to remove the headrest, i.e. by means of moving the fingers 24 apart to open the slit 26, and then sliding the device around the posts 42, 44 into the shown position.

The device 10 is easy to manufacture, is lightweight, inexpensive and does not need particular skill or expertise to fit.

It will be appreciated that the above described embodiments are purely illustrative and are not limiting on the scope of the invention. Other variations and modifications will be apparent to persons skilled in the art upon reading the present application.

Moreover, the disclosure of the present application should be understood to include any novel features or any novel combination of features either explicitly or implicitly disclosed herein or any generalization thereof and during the prosecution of the present application or of any application derived therefrom, new claims may be formulated to cover any such features and/or combination of such features.

## Claims

1. A hook device for a vehicle seat, the device comprising: an elongate strip of material having at one end a forked section defining an interior channel extending part-way along the strip's length, and a slit extending further into the material from the channel with a cut formed either side of the slit to define an aperture, the widthways dimension of the forked section's interior channel and of the aperture being dimensioned so as to be capable of receiving, in use, a respective headrest attachment pole in order that the device can locate between a vehicle seat and an attached headrest.

2. A hook device according to claim 1, wherein the end opposite the forked section is shaped so as to provide a hook.

3. A hook device according to claim 1, provided in planar form with one or more fold regions extending across the width of the strip to enable a hook to be formed by bending at the end opposite the forked section.

4. A hook device according to any preceding claim, wherein the strip of material is formed of metal.

5. An attachment for a vehicle seat, comprising an elongate member having a lengthwise slit extending partway along the member from one end, the slit having a first widthways dimension at said end and a second, narrower, widthways dimension further along the member, an aperture being formed by a cut either side of the narrower slit for receiving in use the post of a seat headrest.
